# EUROPEAN PATENT APPLICATION

(11) **EP 4 468 181 A1**
(43) Date of publication of application: **27.11.2024**
(21) Application number: 23762814.4
(22) Date of filing: 24.02.2023
(51) Int. Cl.: G06F 21/35

(54) **METHOD FOR ACCESSING ELECTRONIC DEVICE, SYSTEM AND APPARATUS**

(30) Priority: 03.03.2022 CN 202210202804
(71) Applicant: Huawei Technologies Co., Ltd., Shenzhen, Guangdong 518129 (CN)
(72) Inventor: DONG, Fuqi, Shenzhen, Guangdong 518129 (CN); XU, Bei, Shenzhen, Guangdong 518129 (CN); FU, Changyao, Shenzhen, Guangdong 518129 (CN)
(74) Representative: Maiwald GmbH
(86) International application number: PCT/CN2023/078029
(87) International publication number: WO 2023/165414

(57) **Abstract**

An electronic device access method, a system, and an apparatus are provided. The method is applied to a first electronic device, a second electronic device, and a third electronic device. When a third-party application installed on the second electronic device needs to access the first electronic device, the third-party application may request permission from a server to directly access the first electronic device. This optimizes a process of accessing the electronic device, improves functionality of the third-party application, and enhances user experience. In addition, the second electronic device may store a message authentication code address of the first electronic device. In this case, when accessing the first electronic device again, the first application may directly access the first electronic device without using the server. This improves a speed of accessing the electronic device.

## Description

This application claims priority to Chinese Patent Application No. 202210202804.4, filed with the China National Intellectual Property Administration on March 3, 2022 and entitled "ELECTRONIC DEVICE ACCESS METHOD, SYSTEM, AND APPARATUS", which is incorporated herein by reference in its entirety.

### TECHNICAL FIELD

Embodiments of this application relate to the field of electronic devices, and more specifically, to an electronic device access method, a system, and an apparatus.

### BACKGROUND

With development of technologies, increasingly more applications may implement various functions by accessing different electronic devices. For example, an application may detect sleep quality of a user by connecting to a wearable device (for example, a smartwatch or a smart band). However, a process of connecting the wearable device to a third-party application is complex. This may cause a problem that the wearable device cannot be connected to the third-party application, and the like.

### SUMMARY

Embodiments of this application provide an electronic device access method, a system, and an apparatus. When a third-party application needs to access an electronic device, the third-party application may request permission from a server for direct access, thereby improving functionality of the third-party application and enhancing user experience.

According to a first aspect, a system is provided, where the system includes a first electronic device, a second electronic device, and a server, where the second electronic device includes a first application, the first application is a third-party application, and the first application requests to access the first electronic device; the first electronic device is configured to send identification information of the first electronic device; the second electronic device is configured to receive the identification information of the first electronic device; the second electronic device is further configured to send authentication request information of the first application to the server, where the authentication request information includes the identification information of the first electronic device and application information of the first application; the server is configured to receive the authentication request information; the server is further configured to determine an authentication result based on the authentication request information; the server is further configured to send the authentication result; the second electronic device is further configured to receive the authentication result; and the second electronic device is further configured to determine, based on the authentication result, whether the first application accesses the first electronic device.

In embodiments of this application, when the third-party application needs to access the electronic device, the third-party application may directly request, from the server, permission for accessing the electronic device. If the server determines that the third-party application can access the electronic device, the third-party application may directly access the electronic device, so that the third-party application can implement various extended functions by accessing the electronic device, thereby improving functionality of the third-party application and enhancing user experience.

With reference to the first aspect, in some implementations of the first aspect, the second electronic device is specifically configured to: when the first application requests to access the first electronic device, receive the identification information of the first electronic device from the first electronic device.

With reference to the first aspect, in some implementations of the first aspect, the second electronic device is specifically configured to: when the first application requests to access the first electronic device, obtain the identification information that is of the first electronic device and that is on the second electronic device and send the authentication request information of the first application to the server.

With reference to the first aspect, in some implementations of the first aspect, the authentication request information further includes identification information of the second electronic device.

In embodiments of this application, the identification information of the second electronic device may be further used as the authentication request information, thereby enhancing security of permission verification, and improving security of user data.

With reference to the first aspect, in some implementations of the first aspect, the first electronic device is specifically configured to send the identification information of the first electronic device through short-range wireless communication.

With reference to the first aspect, in some implementations of the first aspect, the server includes access permission information of the first application, the access permission information indicates a model of an electronic device that the first application is allowed to access, and the server is specifically configured to determine the authentication result based on the authentication request information and the access permission information.

With reference to the first aspect, in some implementations of the first aspect, the server includes access permission information of the first application, the access permission information indicates a model of an electronic device that the first application is allowed to access and a model of an electronic device on which the first application is installed, and the server is specifically configured to determine the authentication result based on the authentication request information and the access permission information.

With reference to the first aspect, in some implementations of the first aspect, the second electronic device is specifically configured to: when the first application accesses the first electronic device, store a message authentication code address of the first electronic device.

In embodiments of this application, after the second electronic device is connected to the first electronic device, the second electronic device may store the message authentication code address of the first electronic device. In this case, when accessing the first electronic device again, the first application may directly access the first electronic device without using the server, thereby improving a speed of accessing the electronic device and enhancing user experience.

According to a second aspect, an electronic device access method is provided, where the method is applied to a second electronic device, the second electronic device includes a first application, the first application is a third-party application, and the method includes: receiving identification information of a first electronic device; sending authentication request information of the first application to a server, where the authentication request information includes the identification information of the first electronic device and application information of the first application; receiving an authentication result sent by the server; and determining, based on the authentication result, whether the first application accesses the first electronic device.

In embodiments of this application, when the third-party application needs to access the electronic device, the third-party application may directly request, from the server, permission for accessing the electronic device. If the server determines that the third-party application can access the electronic device, the third-party application may directly access the electronic device, so that the third-party application can implement various extended functions by accessing the electronic device, thereby improving functionality of the third-party application and enhancing user experience.

With reference to the second aspect, in some implementations of the second aspect, the receiving identification information of a first electronic device includes: when the first application requests to access the first electronic device, receiving the identification information of the first electronic device from the first electronic device.

With reference to the second aspect, in some implementations of the second aspect, the sending authentication request information of the first application to a server includes: when the first application requests to access the first electronic device, obtaining the identification information that is of the first electronic device and that is on the second electronic device and sending the authentication request information of the first application to the server.

With reference to the second aspect, in some implementations of the second aspect, the authentication request information further includes identification information of the second electronic device.

In embodiments of this application, the identification information of the second electronic device may be further used as the authentication request information, thereby enhancing security of permission verification, and improving security of user data.

With reference to the second aspect, in some implementations of the second aspect, the receiving identification information of a first electronic device includes: obtaining the identification information of the first electronic device through a short-range wireless communication message.

With reference to the second aspect, in some implementations of the second aspect, the method further includes: when the first application accesses the first electronic device, storing a message authentication code address of the first electronic device.

In embodiments of this application, after the second electronic device is connected to the first electronic device, the second electronic device may store the message authentication code address of the first electronic device. In this case, when accessing the first electronic device again, the first application may directly access the first electronic device without using the server, thereby improving a speed of accessing the electronic device and enhancing user experience.

According to a third aspect, an electronic device access method is provided, where the method is applied to a server, and the method includes: receiving authentication request information that is of a first application and that is sent by a second electronic device, where the first application is installed on the second electronic device and is a third-party application, the first application requests to access a first electronic device, the authentication request information includes identification information of the first electronic device and application information of the first application, and the identification information of the first electronic device indicates a model of the first electronic device; determining an authentication result based on the authentication request information; and sending the authentication result to the second electronic device.

With reference to the third aspect, in some implementations of the third aspect, the authentication request information further includes identification information of the second electronic device.

With reference to the third aspect, in some implementations of the third aspect, the server includes access permission information of the first application, the access permission information indicates a model of an electronic device that the first application is allowed to access, and the determining an authentication result based on the authentication request information includes: determining the authentication result based on the authentication request information and the access permission information.

With reference to the third aspect, in some implementations of the third aspect, the server includes access permission information of the first application, the access permission information indicates a model of an electronic device that the first application is allowed to access and a model of an electronic device on which the first application is installed, and the determining an authentication result based on the authentication request information includes: determining the authentication result based on the authentication request information and the access permission information.

With reference to the third aspect, in some implementations of the third aspect, the determining the authentication result based on the authentication request information and the access permission information includes: determining the model of the first electronic device based on the identification information of the first electronic device; and determining the authentication result based on the model of the first electronic device and the application information and the access permission information of the first application.

According to a fourth aspect, an electronic device is provided. The electronic device includes modules/units for performing the method in the foregoing second aspect or any possible design of the foregoing second aspect. The modules/units may be implemented by hardware, or may be implemented by hardware executing corresponding software.

According to a fifth aspect, an electronic device is provided. The electronic device includes modules/units for performing the method in the foregoing third aspect or any possible design of the foregoing third aspect. The modules/units may be implemented by hardware, or may be implemented by hardware executing corresponding software.

According to a sixth aspect, a chip is provided. The chip is coupled to a memory in an electronic device, and is configured to invoke a computer program stored in the memory and execute the technical solution in the second aspect and any possible design of the second aspect or the technical solution in the third aspect and any possible design of the third aspect according to embodiments of this application. "Coupling" in embodiments of this application means that two components are directly or indirectly combined with each other.

According to a seventh aspect, a computer-readable storage medium is provided. The computer-readable storage medium includes a computer program, and when the computer program is run on an electronic device, the electronic device is enabled to perform the technical solution in the second aspect and any possible design of the second aspect or the technical solution in the third aspect and any possible design of the third aspect.

According to an eighth aspect, a computer program is provided. The computer program includes instructions, and when the instructions are run on a computer, the computer is enabled to perform the technical solution in the second aspect and any possible design of the second aspect or the technical solution in the third aspect and any possible design of the third aspect.

For beneficial effects of the fourth aspect to the eighth aspect, refer to beneficial effects of the second aspect and the third aspect. Details are not described again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a system according to an embodiment of this application;
FIG. 4 is a diagram of another system according to an embodiment of this application;
FIG. 5 is a schematic flowchart of an electronic device access method according to an embodiment of this application;
FIG. 6 is a schematic flowchart of another electronic device access method according to an embodiment of this application;
FIG. 7 is a schematic flowchart of another electronic device access method according to an embodiment of this application;
FIG. 8 is a schematic flowchart of a method for installing a third-party application on an electronic device according to an embodiment of this application;
FIG. 9 is a diagram of composition of a second electronic device according to an embodiment of this application; and
FIG. 10 is a diagram of composition of a server according to an embodiment of this application.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B each may be singular or plural. A character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized.

The following describes an electronic device and embodiments for using such an electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS^{®}, Android^{®}, Microsoft', HarmonyOS (HarmonyOS), or another operating system. The portable electronic device may alternatively be another portable electronic device, like a laptop (Laptop) computer. It should be further understood that, in some other embodiments, the electronic device may not be the portable electronic device, but a desktop computer, a smart television, a smart speaker, or the like.

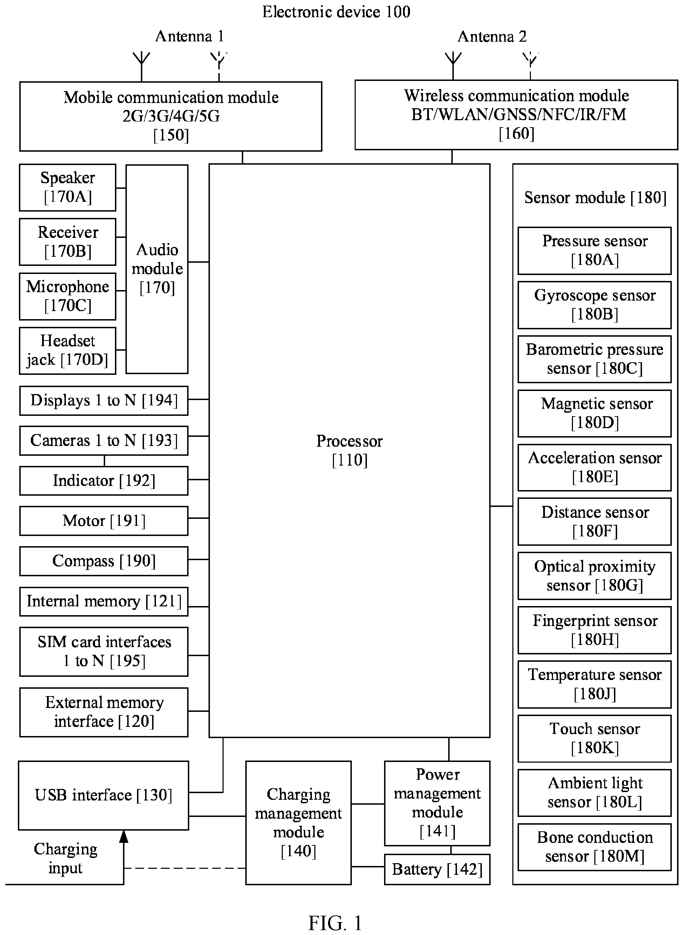

FIG. 1 is an example of a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may be further disposed in the processor 110, configured to store instructions and data. For example, the memory in the processor 110 may be a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves efficiency of processing the data or executing the instructions by the electronic device 101.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to be connected to a charger to charge the electronic device 101, or may be configured to transmit data between the electronic device 101 and a peripheral device. The USB interface 130 may also be used to connect to a headset and play audio through the headset.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store one or more computer programs, and the one or more computer programs include instructions. The processor 110 may run the foregoing instructions stored in the internal memory 121. The internal memory 121 may include a program storage area and a data storage area. The program storage area may store an operating system. The program storage area may further store one or more applications (such as Gallery and Contacts), and the like. The data storage area may store data (for example, a photo and a contact) created during use of the electronic device 101. In addition, the internal memory 121 may include a high-speed random access memory, and may further include a nonvolatile memory, for example, one or more disk storage devices, a flash storage device, a universal flash storage (universal flash storage, UFS), or an embedded multimedia card (Embedded MultiMedia Card, EMMC). In some embodiments, the processor 110 may run the instructions stored in the internal memory 121 and/or the instructions stored in the memory that is disposed in the processor 110, so that the electronic device 101 performs the method provided in embodiments of this application, other applications, and data processing. The electronic device 100 may implement audio functions such as music playing and recording by using the audio module 170, the speaker 170A, the receiver 170B, the microphone 170C, the headset jack 170D, the application processor, and the like.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

An NPU is a neural-network (neural-network, NN) computing processor, quickly processes input information by drawing on a structure of a biological neural network, for example, by drawing on a transmission mode between human brain neurons, and may further continuously perform self-learning. Applications such as intelligent cognition of the electronic device 100 may be implemented through the NPU, for example, image recognition, facial recognition, speech recognition, text understanding, and three-dimensional model reconstruction.

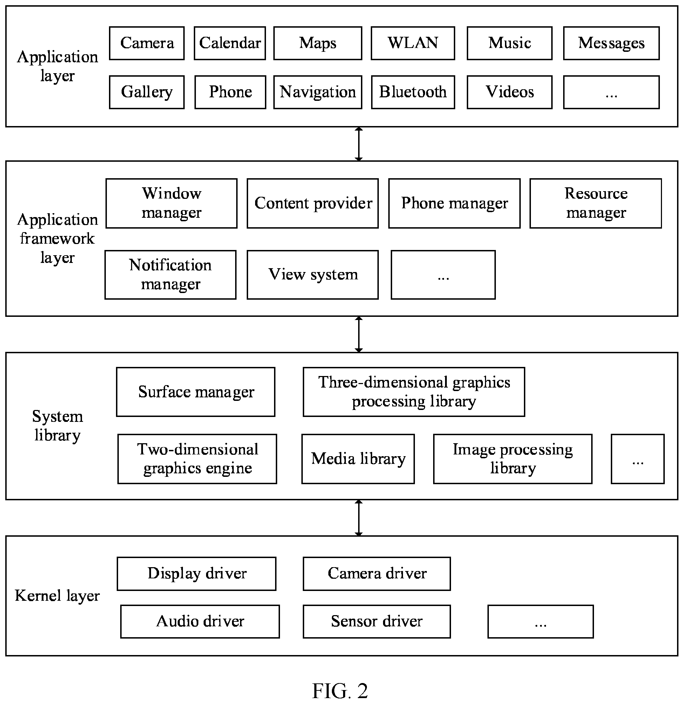

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may receive a size of a display, determine whether there is a status bar, perform screen locking, take a screenshot, and the like.

The content provider is configured to: store and receive data, and enable the data to be accessed by an application. The data may include a video, an image, audio, calls that are made and answered, a browsing history and bookmarks, an address book, and the like.

The view system includes visual controls like a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run in the background, or may be a notification that appears on a screen in a form of a dialog window. For example, text information is displayed in the status bar, a prompt tone is played, the electronic device vibrates, or an indicator blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Currently, when a third-party application accesses a wearable device or is installed on a wearable device, the following problem may exist: For example, when a third-party application installed on an electronic device (for example, a mobile phone or a tablet computer) accesses the wearable device, an access failure may be caused due to a complex access verification mechanism. For another example, when the third-party application is installed on the wearable device, installation fails because of a complex permission verification mechanism. In embodiments of this application, an application that is not provided by an electronic device vendor is referred to as a third-party application. For example, an electronic device #1 is a smartwatch. A device vendor of the smartwatch provides a "Health" application to support various sports functions of the smartwatch, and a device manufacturer that is not the device vendor of the smartwatch provides a "Sleep Monitoring" application to use a sleep monitoring function of the smartwatch. In this case, the "Sleep Monitoring" application may be referred to as a third-party application, and the "Health" may be referred to as an official application, a non-third-party application, or the like.

Based on this, an embodiment of this application provides an electronic device access method. An electronic device can quickly access a third-party application installed on another electronic device, so that the third-party application can implement various functions by using the accessed electronic device, thereby improving user experience.

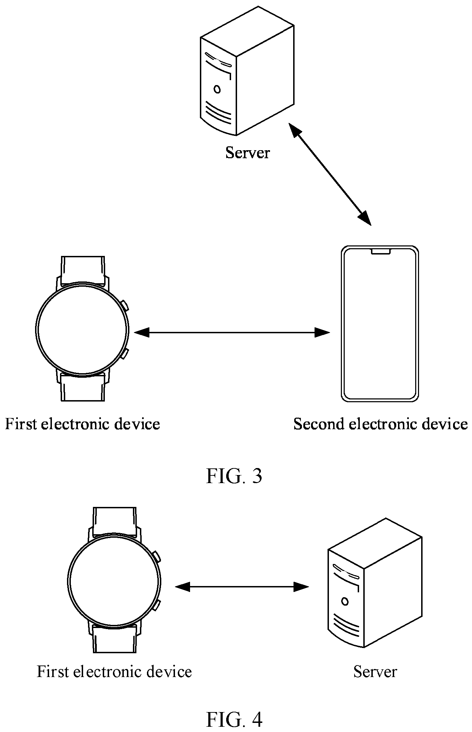

FIG. 3 is a diagram of a system applicable to an embodiment of this application. As shown in FIG. 3, the system includes a first electronic device, a second electronic device, and a server. The first electronic device may be connected to the second electronic device in a wired or wireless manner, and the second electronic device may be connected to the server in a wireless manner. The first electronic device may be connected to the server by using the second electronic device. The first electronic device may be a wearable device like a smartwatch, smart glasses, or a smart speaker. FIG. 3 is merely an example diagram. The system may further include another electronic device, which is not shown in FIG. 3.

FIG. 4 is a diagram of another system applicable to an embodiment of this application. As shown in FIG. 4, the system includes a first electronic device and a server. The first electronic device may be connected to the server in a wireless manner. The first electronic device may be a wearable device like a smartwatch, smart glasses, or a smart speaker. FIG. 4 is merely an example diagram. The system may further include another electronic device, which is not shown in FIG. 4.

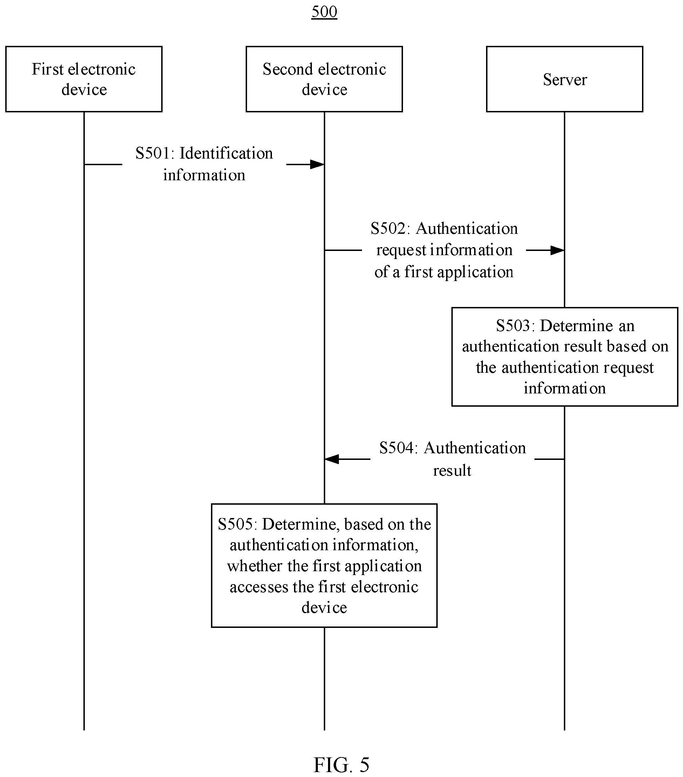

FIG. 5 is a schematic flowchart of an electronic device access method 500 according to an embodiment of this application. As shown in FIG. 5, the method is performed by a first electronic device, a second electronic device, and a server. The first electronic device and the server are provided by a same device vendor, the second electronic device includes a first application, the first application is a third-party application, the first application includes a first module provided by the device vendor of the first electronic device, the first module includes one or more software interfaces, the one or more software interfaces are configured to communicate with the server, the first electronic device, and the second electronic device, and the server stores access permission information of the first application. The method 500 includes the following steps.

S501: The first electronic device sends identification information to the second electronic device.

Correspondingly, the second electronic device receives the identification information of the first electronic device.

In an embodiment, the first electronic device sends the identification information to the second electronic device, and when the first application requests to access the first electronic device, the second electronic device may receive the identification information of the first electronic device. In other words, the first application may obtain the identification information of the first electronic device by using the first module.

In another embodiment, if the second electronic device detects that the first electronic device sends the identification information, the second electronic device may receive the identification information of the first electronic device. In other words, when the first application does not request to access the first electronic device, the second electronic device may also receive the identification information of the first electronic device, so that the first application may obtain the identification information of the first electronic device by using the first module.

In an embodiment, the first electronic device may send the identification information by using a short-range wireless communication technology, so that the second electronic device may receive the identification information of the first electronic device.

The short-range wireless communication technology in embodiments of this application includes but is not limited to Wi-Fi, Bluetooth (bluetooth, BT), and ZigBee.

For example, the first electronic device may broadcast the identification information through Bluetooth, so that the second electronic device may receive the identification information of the first electronic device.

For another example, the first electronic device may broadcast the identification information through Bluetooth, so that when the first application requests to access the first electronic device, the second electronic device receives the identification information of the first electronic device.

The identification information in embodiments of this application indicates a device model of the first electronic device. When the first electronic device sends the identification information by using the short-range wireless communication technology, the identification information may be a Bluetooth name, a Wi-Fi name, or a device identity (identity, ID) of the electronic device.

For example, if a Bluetooth name of the first electronic device is "smartwatch 6", the Bluetooth name indicates that a device model of the first electronic device is "smartwatch 6".

For another example, if a Wi-Fi name of the first electronic device is "smartwatch 6", the Wi-Fi name indicates that the device model of the first electronic device is "smartwatch 6".

For another example, a device ID of the first electronic device is "ABCD".

In an embodiment, the first electronic device may send the identification information through a wired connection, so that the second electronic device may receive the identification information of the first electronic device.

The wired connection in embodiments of this application includes but is not limited to USB type-A, USB type-B, and USB type-C.

When the first electronic device sends the identification information by using the short-range wireless communication technology, the identification information may be a device ID, a USB name, or the like of the electronic device.

S502: The second electronic device sends authentication request information of the first application to the server.

Correspondingly, the server receives the authentication request information that is of the third-party application and that is sent by the second electronic device.

In an embodiment, in step S501, the second electronic device receives the identification information sent by the first electronic device, and when the first application in the second electronic device requests to access the first electronic device, the first application may communicate with the second electronic device by using the first module, to obtain the authentication request information, so that the second electronic device may send the authentication request information of the first application to the server by using the first application.

In another embodiment, in step S501, if the second electronic device receives the identification information of the first electronic device when the first application requests to access the first electronic device, the first application may communicate with the second electronic device by using the first module, to obtain the authentication request information, so that the second electronic device may send the authentication request information of the first application to the server by using the first application.

In the foregoing embodiments, the authentication request information may include identification information of the first electronic device and application information of the first application, where the application information indicates a name of the first application, and the first application is a third-party application.

For example, the application information may be a package name (package name) of the first application. For example, the package name of the application is "abed".

For example, the application information may alternatively be the name of the first application.

Optionally, in some embodiments, the authentication request information further includes a certificate of the first application and/or identification information of the second electronic device and/or operating system information of the second electronic device, where the first application may communicate with the second electronic device by using the first module, to obtain the identification information of the second electronic device and/or the operating system information of the second electronic device.

The certificate of the first application may be preset in the first application, or the second electronic device may obtain the certificate by using a server corresponding to the first application. The certificate of the first application is used to verify the first application. For specific descriptions, refer to the following descriptions.

The operating system information of the second electronic device may include a type of an operating system of the second electronic device, and may further include a version of the operating system of the second electronic device. For example, the type of the operating system of the second electronic device is "HarmonyOS". For another example, the version of the operating system of the second electronic device is "HarmonyOS 2.0".

It should be understood that, for descriptions of the identification information of the second electronic device, refer to descriptions of the identification information of the first electronic device. For brevity, details are not described herein again.

S503: The server determines an authentication result based on the authentication request information.

Specifically, after receiving the authentication request information sent by the second electronic device, the server may determine permission of the first application based on the authentication request information to generate the authentication result.

In an embodiment, the authentication request information includes the identification information of the first electronic device and the application information of the first application. The server may determine, based on the identification information of the first electronic device and the application information of the first application, whether the first application has permission to access the first electronic device, where the server may store access permission information of the first application, and the access permission information indicates a model of an electronic device accessed by the first application.

In a possible implementation, if the identification information of the first electronic device directly indicates the model of the first electronic device and the application information of the first application directly indicates the name of the first application, the server may determine, based on stored permission, whether the first application has permission to access the first electronic device.

For example, it is assumed that the identification information of the first electronic device is the Bluetooth name, the Bluetooth name is "smartwatch 6", the application information of the first application is an application name, and the application name is "Sleep Monitoring". In addition, access permission that is of the "Sleep Monitoring" and that is stored in the server is allowing access to the "smartwatch 5". The second electronic device sends the identification information of the first electronic device and the application information of the first application to the server. After receiving the foregoing information, the server may determine, based on the foregoing information, that permission of the "Sleep Monitoring" is different from the permission that is of the "Sleep Monitoring" and that is stored in the server, that is, the "Sleep Monitoring" cannot access the "smartwatch 6". In this case, the authentication result may be generated to indicate the first application not to access the first electronic device.

For another example, it is assumed that the identification information of the first electronic device is the Bluetooth name, the Bluetooth name is "smartwatch 5", the application information of the first application is an application name, and the application name is "Sleep Monitoring". In addition, access permission that is of the "Sleep Monitoring" and that is stored in the server is allowing access to the "smartwatch 5". The second electronic device sends the identification information of the first electronic device and the application information of the first application to the server. After receiving the foregoing information, the server may determine, based on the foregoing information, that permission of the "Sleep Monitoring" is the same as the permission that is of the "Sleep Monitoring" and that is stored in the server, that is, the "Sleep Monitoring" may access the "smartwatch 5". In this case, the authentication result may be generated to indicate the first application to access the first electronic device.

In a possible implementation, the identification information of the first electronic device is the device ID and the application information of the first application directly indicates the name of the first application. The server may determine, based on the device ID and the name of the first application, whether the first application has permission to access the first electronic device.

For example, it is assumed that the identification information of the first electronic device is the device ID, the device ID is "ABCD", the application information of the first application is the application name, and the application name is "Sleep Monitoring". In addition, the access permission that is of the "Sleep Monitoring" and that is stored in the server is allowing access to the electronic device whose device ID is "ABCD". The second electronic device sends the identification information of the first electronic device and the application information of the first application to the server. After receiving the foregoing information, the server may determine, based on the foregoing information, that permission of the "Sleep Monitoring" is the same as the permission that is of the "Sleep Monitoring" and that is stored in the server, that is, the "Sleep Monitoring" may access the electronic device whose device ID is "ABCD". In this case, the authentication result may be generated to indicate the first application to access the first electronic device.

In a possible implementation, the identification information of the first electronic device is the device ID and the application information of the first application directly indicates the name of the first application. The server may determine the model of the first electronic device based on the device ID, and determine, based on the model of the first electronic device and the name of the first application, whether the first application has permission to access the first electronic device.

For example, it is assumed that the identification information of the first electronic device is the device ID, the device ID is "ABCD", the application information of the first application is the application name, and the application name is "Sleep Monitoring". The second electronic device sends the identification information of the first electronic device and the application information of the first application to the server. After receiving the foregoing information, the server may obtain, through parsing based on the device ID, a device model "smartwatch 5" corresponding to the device ID. In addition, access permission that is of the "Sleep Monitoring" and that is stored in the server is allowing access to the "smartwatch 5". In this case, the server may generate the authentication result to indicate the first application to access the first electronic device.

In a possible implementation, the identification information of the first electronic device is the device ID and the application information of the first application is the package name, indirectly indicating the name of the first application. The server may determine the model of the first electronic device based on the device ID, determine the name of the first electronic device based on the package name of the first application, and determine, based on the model of the first electronic device and the name of the first application, whether the first application has permission to access the first electronic device.

For example, it is assumed that the identification information of the first electronic device is the device ID, the device ID is "ABCD", the application information of the first application is the package name, and the package name is "abed". The second electronic device sends the identification information of the first electronic device and the application information of the first application to the server. After receiving the foregoing information, the server may obtain, through parsing based on the device ID, a device model "smartwatch 5" corresponding to the device ID and obtain, through parsing based on the package name, an application name "Sleep Monitoring" corresponding to the package name. In addition, access permission that is of the "Sleep Monitoring" and that is stored in the server is allowing access to the "smartwatch 5". In this case, the server may generate the authentication result to indicate the first application to access the first electronic device.

In an embodiment, the authentication request information includes the identification information of the first electronic device, the application information of the first application, and the certificate of the first application. The server may determine, based on the identification information of the first electronic device, the application information of the first application, and the certificate of the first application, whether the first application has permission to access the first electronic device, where the server may store access permission information of the first application, and in this embodiment, the access permission information indicates a model of an electronic device accessed by the first application.

For example, it is assumed that the identification information of the first electronic device indicates that the device model of the first electronic device is "smartwatch 5", the application information of the first application indicates that the name of the first application is "Sleep Monitoring". In addition, access permission that is of the "Sleep Monitoring" and that is stored in the server is allowing access to the "smartwatch 5". The second electronic device sends the identification information of the first electronic device, the application information of the first application, and the certificate of the first application to the server. After receiving the foregoing information, the server may first verify whether the certificate of the first application is correct. After verifying the certificate, the server may determine, based on the foregoing information, that permission of the "Sleep Monitoring" is the same as the permission that is of the "Sleep Monitoring" and that is stored in the server, that is, the "Sleep Monitoring" may access the "smartwatch 5". In this case, the authentication result may be generated to indicate the first application to access the first electronic device.

It should be understood that for descriptions in which the identification information of the first electronic device indicates the device model of the first electronic device and the application information of the first application indicates the name of the first application, refer to the foregoing descriptions. For brevity, details are not described herein again.

In an embodiment, the authentication request information includes the identification information of the first electronic device, the application information of the first application, and the identification information of the second electronic device. The server may determine, based on the identification information of the first electronic device, the application information of the first application, and the identification information of the second electronic device, whether the first application has permission to access the first electronic device, where the server may store access permission information of the first application, and in this embodiment, the access permission information indicates a model of an electronic device accessed by the first application and further indicates a model of an electronic device on which the first application is installed.

For example, it is assumed that the identification information of the first electronic device indicates that a device model of the first electronic device is "smartwatch 5", the application information of the first application indicates that the first application is "Sleep Monitoring", the identification information of the second electronic device is the device ID, the device ID is "BCDE". In addition, access permission that is of the "Sleep Monitoring" and that is stored in the server is allowing access to the "smartwatch 5", and a device ID of an electronic device on which the "Sleep Monitoring" is installed needs to be "BCDE". The second electronic device sends the identification information of the first electronic device, the application information of the first application, and the identification information of the second electronic device to the server. After receiving the foregoing information, the server may determine, based on the foregoing information, that permission of the "Sleep Monitoring" is the same as the permission that is of the "Sleep Monitoring" and that is stored in the server, that is, the "Sleep Monitoring" may access the "smartwatch 5". In this case, the authentication result may be generated to indicate the first application to access the first electronic device.

It should be understood that for descriptions in which the identification information of the first electronic device indicates the device model of the first electronic device and the application information of the first application indicates the name of the first application, refer to the foregoing descriptions. For brevity, details are not described herein again.

For another example, it is assumed that the identification information of the first electronic device indicates that the device model of the first electronic device is "smartwatch 5", the application information of the first application indicates that the first application is "Sleep Monitoring", the identification information of the second electronic device is the device ID, and the device ID is "BCDE". The second electronic device sends the identification information of the first electronic device, the application information of the first application, and the identification information of the second electronic device to the server. After receiving the foregoing information, the server may determine, based on the identification information of the first electronic device, that the model of the first electronic device is the "smartwatch 5", determine, based on the application information of the first application, that the name of the first application is "Sleep Monitoring", and determine, based on the device ID "BCDE", that a model corresponding to the device ID is "smartphone A". In addition, access permission that is of the "Sleep Monitoring" and that is stored in the server is allowing access to the "smartwatch 5", and a model of an electronic device on which the "Sleep Monitoring" is installed needs to be the "smartphone A". In this case, the server may generate the authentication result to indicate the first application to access the first electronic device.

It should be understood that for descriptions in which the identification information of the first electronic device indicates the device model of the first electronic device and the application information of the first application indicates the name of the first application, refer to the foregoing descriptions. For brevity, details are not described herein again.

In an embodiment, the authentication request information includes the identification information of the first electronic device, the application information of the first application, and the operating system information of the second electronic device. The server may determine, based on the identification information of the first electronic device, the application information of the first application, and the operating system information of the second electronic device, whether the first application has permission to access the first electronic device, where the server may store access permission information of the first application, and in this embodiment, the access permission information indicates a model of an electronic device accessed by the first application and further indicates operating system information of an electronic device on which the first application is installed.

For example, it is assumed that the identification information of the first electronic device indicates that a device model of the first electronic device is "smartwatch 5", the application information of the first application indicates that the first application is "Sleep Monitoring", and the operating system information of the second electronic device indicates that an operating system of the second electronic device is "HarmonyOS". In addition, access permission that is of the "Sleep Monitoring" and that is stored in the server is allowing access to the "smartwatch 5", and an operating system of an electronic device on which the "Sleep Monitoring" is installed needs to be "HarmonyOS". The second electronic device sends the identification information of the first electronic device, the application information of the first application, and the operating system information of the second electronic device to the server. After receiving the foregoing information, the server may determine, based on the foregoing information, that permission of the "Sleep Monitoring" is the same as the permission that is of the "Sleep Monitoring" and that is stored in the server, that is, the "Sleep Monitoring" may access the "smartwatch 5". In this case, the authentication result may be generated to indicate the first application to access the first electronic device.

It should be understood that for descriptions in which the identification information of the first electronic device indicates the device model of the first electronic device and the application information of the first application indicates the name of the first application, refer to the foregoing descriptions. For brevity, details are not described herein again.

For another example, it is assumed that the identification information of the first electronic device indicates that a device model of the first electronic device is "smartwatch 5", the application information of the first application indicates that the first application is "Sleep Monitoring", and the operating system information of the second electronic device indicates that an operating system version of the second electronic device is "HarmonyOS 3.0". In addition, access permission that is of the "Sleep Monitoring" and that is stored in the server is allowing access to the "smartwatch 5", and an operating system version of an electronic device on which the "Sleep Monitoring" is installed needs to be "HarmonyOS 3.0". The second electronic device sends the identification information of the first electronic device, the application information of the first application, and the operating system information of the second electronic device to the server. After receiving the foregoing information, the server may determine, based on the foregoing information, that permission of the "Sleep Monitoring" is the same as the permission that is of the "Sleep Monitoring" and that is stored in the server, that is, the "Sleep Monitoring" may access the "smartwatch 5". In this case, the authentication result may be generated to indicate the first application to access the first electronic device.

It should be understood that for descriptions in which the identification information of the first electronic device indicates the device model of the first electronic device and the application information of the first application indicates the name of the first application, refer to the foregoing descriptions. For brevity, details are not described herein again.

In an embodiment, the authentication request information includes the identification information of the first electronic device, the application information of the first application, and the identification information and a certificate of the second electronic device. The server may determine, based on the identification information of the first electronic device, the application information of the first application, and the identification information and the certificate of the second electronic device, whether the first application has permission to access the first electronic device.

It should be understood that descriptions of this embodiment are similar to the foregoing descriptions. For brevity, details are not described herein again.

In an embodiment, the authentication request information includes the identification information of the first electronic device, the application information of the first application, and the operating system information and a certificate of the second electronic device. The server may determine, based on the identification information of the first electronic device, the application information of the first application, and the identification information and the certificate of the second electronic device, whether the first application has permission to access the first electronic device.

It should be understood that descriptions of this embodiment are similar to the foregoing descriptions. For brevity, details are not described herein again.

In an embodiment, the authentication request information includes the identification information of the first electronic device, the application information of the first application, and the identification information, the operating system information, and a certificate of the second electronic device. The server may determine, based on the identification information of the first electronic device, the application information of the first application, and the identification information and the certificate of the second electronic device, whether the first application has permission to access the first electronic device.

It should be understood that descriptions of this embodiment are similar to the foregoing descriptions. For brevity, details are not described herein again.

Further, in the foregoing embodiments, the access permission information that is of the first application and that is stored in the server further includes authorized duration information. For example, the access permission that is of the "Sleep Monitoring" and that is stored in the server is allowing the "Sleep Monitoring" to access the "smartwatch 5", and authorized time is from February 28, 2022 to February 28, 2023, that is, allowing the "Sleep Monitoring" to access the "smartwatch 5" within the foregoing time period and cannot access the "smartwatch 5" within another period.

Alternatively, in the foregoing embodiments, the server may not store the access permission information indicating the model of the electronic device accessed by the first application. After receiving the authentication request information, the server may determine the permission of the first application in an artificial intelligence (Artificial Intelligence, AI) manner and generate the authentication result. For example, the server may input the received authentication request information into a pre-trained neural network model, to obtain the authentication result.

S504: The server sends the authentication result to the second electronic device.

Correspondingly, the second electronic device receives the authentication result sent by the server.

Specifically, after generating the authentication result based on the authentication request information, the server may send the authentication result to the second electronic device, to indicate the first application to determine whether to access the first electronic device.

For example, the authentication result may be indicated by using one bit. "0" indicates that the first application has no permission to access the first electronic device, and " 1 " indicates that the first application has permission to access the first electronic device, that is, whether the first application has permission to access the first electronic device is directly indicated.

For another example, the authentication result may be indicated by using one bit. "0" indicates that the authentication request information does not correspond to the access permission that is of the first application and that is stored in the server, and " 1" indicates that the authentication request information corresponds to the access permission that is of the first application and that is stored in the server, that is, whether the first application has permission to access the first electronic device is indirectly indicated.

S505: The second electronic device determines, based on the authentication result, whether the first application accesses the first electronic device.

Specifically, after receiving the authentication result, the second electronic device may determine, based on the authentication result, whether the first application accesses the first electronic device.

For example, when the authentication result indicates that the first application has no permission to access the first electronic device, the first application does not access the first electronic device.

For another example, when the authentication result indicates that the first application has permission to access the first electronic device, the first application accesses the first electronic device.

In embodiments of this application, when the third-party application needs to access the electronic device, the third-party application may directly request, from the server, permission for accessing the electronic device. If the server determines that the third-party application can access the electronic device, the third-party application may directly access the electronic device, so that the third-party application can implement various extended functions by accessing the electronic device, thereby improving functionality of the third-party application and enhancing user experience.

Optionally, in some embodiments, after the first electronic device is connected to the second electronic device, that is, after the first application accesses the first electronic device, the second electronic device may store a message authentication code (message authentication code, MAC) address of the first electronic device.

In embodiments of this application, after the second electronic device is connected to the first electronic device, the second electronic device may store the MAC address of the first electronic device. In this case, when accessing the first electronic device again, the first application may directly access the first electronic device without using the server, thereby improving a speed of accessing the electronic device and enhancing user experience.

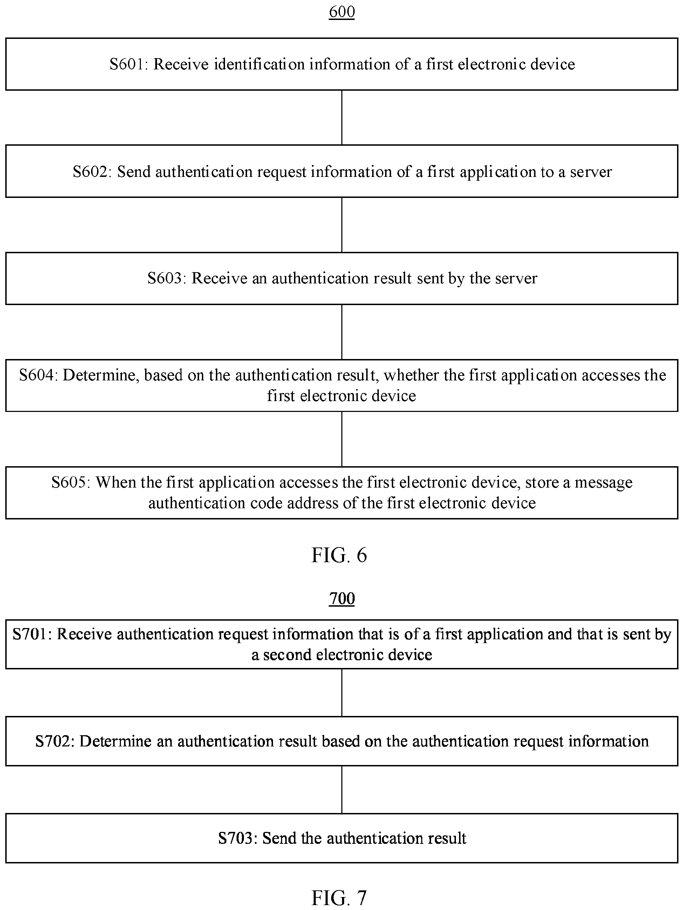

FIG. 6 is a schematic flowchart of another electronic device access method 600 according to an embodiment of this application. As shown in FIG. 6, the method 600 may be performed by a second electronic device, and the method 600 includes the following steps.

S601: Receive identification information of a first electronic device.

In an embodiment, the second electronic device may receive the identification information of the first electronic device.

In another embodiment, when a first application of the second electronic device requests to access the first electronic device, the second electronic device may receive the identification information of the first electronic device.

It should be understood that, for a process in which the second electronic device receives the identification information of the first electronic device, refer to step S501 in the method 500. For brevity, details are not described herein again.

S602: Send authentication request information of the first application to a server.

In an embodiment, after receiving the identification information of the first electronic device, when the first application requests to access the first electronic device, the second electronic device may send the authentication request information of the first application to the server.

In an embodiment, when the first application requests to access the first electronic device, the second electronic device receives the identification information of the first electronic device, and then sends the authentication request information of the first application to the server.

It should be understood that, for a process in which the second electronic device sends the authentication request information of the first program to the server, refer to step S502 in the method 500. For brevity, details are not described herein again.

S603: Receive an authentication result sent by the server.

It should be understood that, for a process in which the second electronic device receives the authentication result sent by the server, refer to step S504 in the method 500. For brevity, details are not described herein again.

S604: Determine, based on the authentication result, whether to access the first electronic device.

In an embodiment, when the authentication result indicates that the first application has no permission to access the first electronic device, the second electronic device may reject a request that is of the first application and that is for accessing the first electronic device.

In an embodiment, when the authentication result indicates that the first application has permission to access the first electronic device, the second electronic device allows the first application to access the first electronic device.

In an embodiment, when the second electronic device does not receive the authentication result within preset time, the second electronic device may reject a request that is of the first application and that is for accessing the first electronic device.

In embodiments of this application, when the third-party application needs to access the electronic device, the third-party application may directly request, from the server, permission for accessing the electronic device. If the server determines that the third-party application can access the electronic device, the third-party application may directly access the electronic device, so that the third-party application can implement various extended functions by accessing the electronic device, thereby improving functionality of the third-party application and enhancing user experience.

Optionally, in some embodiments, the method 600 further includes the following step.

S605: When the first application accesses the first electronic device, store a message authentication code address of the first electronic device.

Specifically, when receiving the identification information of the first application, the second electronic device may further obtain the message authentication code (message authentication code, MAC) address of the first electronic device, so that when the first application accesses the first electronic device, the second electronic device may store the MAC address of the first electronic device.

In embodiments of this application, because the second electronic device may further obtain the MAC address of the first electronic device when receiving the identification information of the first application, when the first application accesses the first electronic device, the second electronic device may store the MAC address of the first electronic device. In this case, when accessing the first electronic device again, the first application may directly access the first electronic device without using the server, thereby improving a speed of accessing the electronic device and enhancing user experience.

FIG. 7 is a schematic flowchart of another electronic device access method 700 according to an embodiment of this application. As shown in FIG. 7, the method 700 may be performed by a server, and the method 700 includes the following steps.

S701: Receive authentication request information that is of a first application and that is sent by a second electronic device.

It should be understood that, for a process in which the server receives the authentication request information that is of the first application and that is sent by the second electronic device, refer to step S502 in the method 500. For brevity, details are not described herein again.

S702: Determine an authentication result based on the authentication request information.

Specifically, after receiving the authentication request information that is of the first application and that is sent by the second electronic device, the server may determine the authentication result corresponding to the first application.

It should be understood that, for a process in which the server determines the authentication result based on the authentication request information, refer to step S503 in the method 500. For brevity, details are not described herein again.

S703: Send the authentication result.

It should be understood that, for a process in which the server sends the authentication result, refer to step S504 in the method 500. For brevity, details are not described herein again.

In embodiments of this application, when a third-party application needs to access an electronic device, the server may determine permission of the third-party application for accessing the electronic device, so that the third-party application can quickly access the electronic device to implement various extended functions, thereby improving functionality of the third-party application and enhancing user experience.

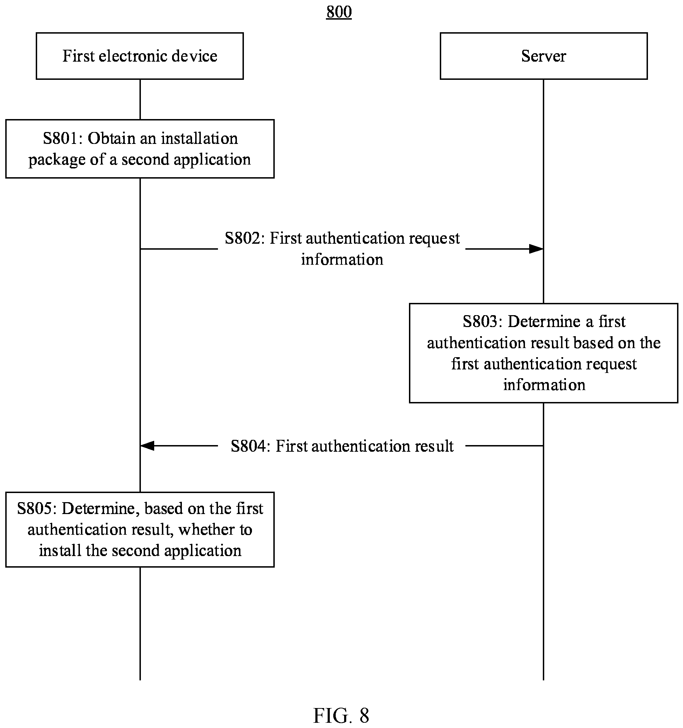

FIG. 8 is a schematic flowchart of a method 800 for installing a third-party application on an electronic device according to an embodiment of this application. As shown in FIG. 8, the method 800 may be performed by a first electronic device and a server, where the first electronic device and the server are provided by a same vendor, and the server stores permission for installing an application on the first electronic device. The method 800 includes the following steps.

S801: The first electronic device obtains an installation package of a second application.

Specifically, the first electronic device obtains the installation package of the second application, where the second application is a third-party application.

For example, the first electronic device obtains the installation package of the second application from a server of the second application by using a mobile communication technology.

For example, the first electronic device receives the installation package that is of the second application and that is sent by the another electronic device.

S802: The first electronic device sends first authentication request information to the server.

Correspondingly, the server receives the first authentication request information sent by the first electronic device.

Specifically, the authentication request information includes a name (or a package name) of the second application and identification information of the first electronic device. The first electronic device obtains the name (or the package name) of the second application from the installation package of the second application, and then sends the name (or the package name) of the second application and the identification information of the first electronic device to the server.

It should be understood that for descriptions of the name (or the package name) of the second application and the identification information of the first electronic device, refer to the foregoing descriptions. For brevity, details are not described herein again.

S803: The server determines a first authentication result based on the first authentication request information.

Specifically, after receiving the first authentication request information sent by the first electronic device, the server may determine the first authentication result based on stored permission that is for installing the application and that is of the first electronic device and the first authentication request information, where the first authentication result indicates whether the first electronic device is to install the second application.

For example, it is assumed that the identification information of the first electronic device indicates that a device model of the first electronic device is "smartwatch 5", application information of the application indicates that the first application is "Sleep Monitoring". In addition, installation permission that is of the "smartwatch 5" and that is stored in the server is allowing to install the "Sleep Monitoring". The first electronic device sends the foregoing information to the server. After receiving the foregoing information, the server may generate the first authentication result to indicate the first electronic device to install the second application if the application that the first smart device requests to install is consistent with stored permission.

S804: The server sends the first authentication result to the first electronic device.

Correspondingly, the first electronic device receives the first authentication result sent by the server.

S805: The first electronic device determines, based on the first authentication result, whether to install the second application.

Specifically, after receiving the first authentication result, the first electronic device may determine whether to install the second application.

In embodiments of this application, when installing the third-party application, the first electronic device may request the server to query whether the first electronic device has permission to install the third-party application. When the first electronic device has the permission to install the third-party application, the server may generate the authentication result, so that the first electronic device can install the third-party application, thereby improving data security of the first electronic device.

The foregoing mainly describes the electronic device access method provided in embodiments of this application from a perspective of an electronic device. It may be understood that, to implement the foregoing functions, the electronic device includes corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, functional modules of a processor in the electronic device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that the module division in embodiments of this application is an example, and is merely logical function division. In actual implementation, there may be another division manner.

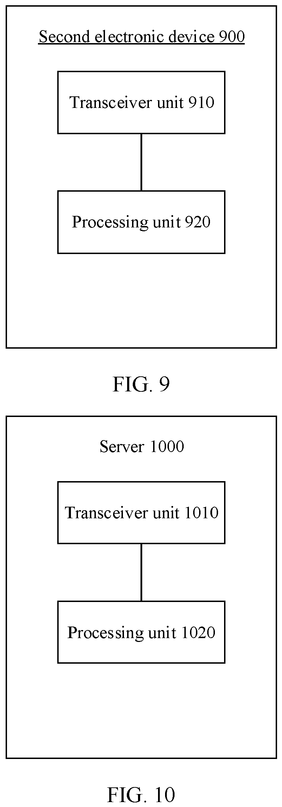

When each functional module is obtained through division based on each corresponding function, FIG. 9 is a diagram of composition of a second electronic device 900 according to an embodiment of this application. As shown in FIG. 9, the second electronic device includes a transceiver unit 910 and a processing unit 920.

The transceiver unit 910 is configured to receive identification information of a first electronic device.

The transceiver unit 910 is further configured to send authentication request information of a first application to a server.

The transceiver unit 910 is further configured to receive an authentication result sent by the server.

The processing unit 920 is configured to determine, based on the authentication result, whether to access the first electronic device.

It should be noted that all related content of the steps in the foregoing method embodiments may be referenced to function descriptions of corresponding functional units. Details are not described herein again. The second electronic device provided in embodiments of this application is configured to perform the foregoing electronic device access method, and therefore can achieve same effect as foregoing effect.

FIG. 10 is a diagram of composition of a server 1000 according to an embodiment of this application. As shown in FIG. 10, the server includes a transceiver unit 1010 and a processing unit 1020.

The transceiver unit 1010 is configured to receive authentication request information that is of a first application and that is sent by a second electronic device.

The processing unit 1020 is configured to determine an authentication result based on the authentication request information.

The transceiver unit 1010 is further configured to send the authentication result.

It should be noted that all related content of the steps in the foregoing method embodiments may be referenced to function descriptions of corresponding functional units. Details are not described herein again. The server provided in embodiments of this application is configured to perform the foregoing electronic device access method, and therefore can achieve same effect as foregoing effect.

An embodiment of this application further provides an electronic device, including a processor, a memory, an application, and a computer program. The foregoing components may be connected by using one or more communication buses. The one or more computer programs are stored in the memory and are configured to be executed by the one or more processors. The one or more computer programs include instructions, and the instructions may be used to enable the electronic device to perform the steps of the second electronic device in the foregoing embodiments.

For example, the processor may be specifically the processor 110 shown in FIG. 1, and the memory may be specifically the internal memory 120 shown in FIG. 1 and/or an external memory connected to the electronic device.

An embodiment of this application further provides a chip. The chip includes a processor and a communication interface. The communication interface is configured to receive a signal, and transmit the signal to the processor. The processor processes the signal, so that the electronic device access method in any one of the foregoing possible implementations is performed.

This embodiment further provides a computer-readable storage medium. The computer-readable storage medium stores computer instructions. When the computer instructions are run on an electronic device, the electronic device is enabled to perform the foregoing related method steps, to implement the electronic device access method in the foregoing embodiments.

This embodiment further provides a computer program product. When the computer program product runs on a computer, the computer is enabled to perform the foregoing related steps, to implement the electronic device access method in the foregoing embodiments.

An embodiment of this application further provides a system. The system includes the first electronic device, the second electronic device, and the server that are provided in the foregoing embodiments.

According to context, the term "when..." or "after..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, comprising a first electronic device, a second electronic device, and a server, wherein the second electronic device comprises a first application, the first application is a third-party application, and the first application requests to access the first electronic device;
the first electronic device is configured to send identification information of the first electronic device;
the second electronic device is configured to receive the identification information of the first electronic device;
the second electronic device is further configured to send authentication request information of the first application to the server, wherein the authentication request information comprises the identification information of the first electronic device and application information of the first application;
the server is configured to receive the authentication request information;
the server is further configured to determine an authentication result based on the authentication request information;
the server is further configured to send the authentication result;
the second electronic device is further configured to receive the authentication result; and
the second electronic device is further configured to determine, based on the authentication result, whether the first application accesses the first electronic device.

2. The system according to claim 1, wherein the second electronic device is specifically configured to: when the first application requests to access the first electronic device, receive the identification information of the first electronic device from the first electronic device.

3. The system according to claim 1, wherein the second electronic device is specifically configured to: when the first application requests to access the first electronic device, obtain the identification information that is of the first electronic device and that is on the second electronic device and send the authentication request information of the first application to the server.

4. The system according to any one of claims 1 to 3, wherein the authentication request information further comprises identification information of the second electronic device.

5. The system according to any one of claims 1 to 4, wherein the first electronic device is specifically configured to send the identification information of the first electronic device through short-range wireless communication.

6. The system according to any one of claims 1 to 3, wherein the server comprises access permission information of the first application, the access permission information indicates a model of an electronic device that the first application is allowed to access, and the server is specifically configured to determine the authentication result based on the authentication request information and the access permission information.

7. The system according to claim 4, wherein the server comprises access permission information of the first application, the access permission information indicates a model of an electronic device that the first application is allowed to access and a model of an electronic device on which the first application is installed, and the server is specifically configured to determine the authentication result based on the authentication request information and the access permission information.

8. The system according to any one of claims 1 to 7, wherein the second electronic device is further configured to: when the first application accesses the first electronic device, store a message authentication code address of the first electronic device.

9. An electronic device access method, wherein the method is applied to a second electronic device, the second electronic device comprises a first application, the first application is a third-party application, and the method comprises:
receiving identification information of a first electronic device;
sending authentication request information of the first application to a server, wherein the authentication request information comprises the identification information of the first electronic device and application information of the first application;
receiving an authentication result sent by the server; and
determining, based on the authentication result, whether the first application accesses the first electronic device.

10. The method according to claim 9, wherein the receiving identification information of a first electronic device comprises:
when the first application requests to access the first electronic device, receiving the identification information of the first electronic device from the first electronic device.

11. The method according to claim 9, wherein the sending authentication request information of the first application to a server comprises:
when the first application requests to access the first electronic device, obtaining the identification information that is of the first electronic device and that is on the second electronic device and sending the authentication request information of the first application to the server.

12. The method according to any one of claims 9 to 11, wherein the authentication request information further comprises identification information of the second electronic device.

13. The method according to any one of claims 9 to 12, wherein the receiving identification information of a first electronic device comprises:
obtaining the identification information of the first electronic device through a short-range wireless communication message.

14. The method according to any one of claims 9 to 13, wherein the method further comprises:
when the first application accesses the first electronic device, storing a message authentication code address of the first electronic device.

15. An electronic device access method, wherein the method is applied to a server, and the method comprises:
receiving authentication request information that is of a first application and that is sent by a second electronic device, wherein the first application is installed on the second electronic device and is a third-party application, the first application requests to access a first electronic device, the authentication request information comprises identification information of the first electronic device and application information of the first application, and the identification information of the first electronic device indicates a model of the first electronic device;
determining an authentication result based on the authentication request information; and
sending the authentication result to the second electronic device.

16. The method according to claim 15, wherein the authentication request information further comprises identification information of the second electronic device.

17. The method according to claim 15, wherein the server comprises access permission information of the first application, the access permission information indicates a model of an electronic device that the first application is allowed to access, and the determining an authentication result based on the authentication request information comprises:
determining the authentication result based on the authentication request information and the access permission information.

18. The method according to claim 15, wherein the server comprises access permission information of the first application, the access permission information indicates a model of an electronic device that the first application is allowed to access and a model of an electronic device on which the first application is installed, and the determining an authentication result based on the authentication request information comprises:
determining the authentication result based on the authentication request information and the access permission information.

19. The method according to claim 17 or 18, wherein the determining the authentication result based on the authentication request information and the access permission information comprises:
determining the model of the first electronic device based on the identification information of the first electronic device; and
determining the authentication result based on the model of the first electronic device and the application information and the access permission information of the first application.

20. An electronic device, wherein the electronic device comprises:
one or more processors; and
one or more memories, wherein
the one or more memories store one or more computer programs, the one or more computer programs comprise instructions, and when the instructions are executed by the one or more processors, the electronic device is enabled to perform the method according to any one of claims 9 to 14.

21. A server, wherein the electronic device comprises:
one or more processors; and
one or more memories, wherein
the one or more memories store one or more computer programs, the one or more computer programs comprise instructions, and when the instructions are executed by the one or more processors, the server is enabled to perform the method according to any one of claims 15 to 19.

22. A computer-readable storage medium, comprising computer instructions, wherein
when the computer instructions are run on an electronic device, the electronic device is enabled to perform the method according to any one of claims 9 to 14; or
when the computer instructions are run on a server, the server is enabled to perform the method according to any one of claims 15 to 19.
